Europäisches Patentamt

European Patent Office

Office européen des brevets

(11) Publication number: **0 308 866**
**A2**

## (12) EUROPEAN PATENT APPLICATION

(21) Application number: **88115395.1**

(22) Date of filing: **20.09.88**

(51) Int. Cl.⁴: **H01H 43/04 , H01H 13/58**

(30) Priority: **24.09.87 US 100377**

(43) Date of publication of application:
**29.03.89 Bulletin 89/13**

(84) Designated Contracting States:
**BE DE FR GB NL**

(71) Applicant: **HONEYWELL INC.**
**Honeywell Plaza**
**Minneapolis Minnesota 55408(US)**

(72) Inventor: **Strand, Rolf L.**
**3236 Adair Avenue North**
**Crystal Minnesota 55422(US)**

(74) Representative: **Rentzsch, Heinz et al**
**Honeywell Europe S.A. Holding KG Patent &**
**License Dept. Postfach 10 08 65**
**Kaiserleistrasse 39**
**D-6050 Offenbach am Main(DE)**

(54) Ratchet switch operator.

(57) A switch operator has a low friction ratchet (11) driven by a low power time programmed clock (10) to operate the switch (12) in one position or another depending upon the position of the ratchet to operate said ratchet independent of the time programmed clock. A pawl (20) resiliently held and biased (22) away from the ratchet engages the ratchet when moving in a forward direction to move it a predetermined amount. A stationary cam (23) mounted adjacent the ratchet is engaged by the pawl to bias the pawl against a projection (25) on the ratchet when the pawl is moved forward and to bias the pawl away from the ratchet upon its return movement.

Fig. 1

EP 0 308 866 A2

## RATCHET SWITCH OPERATOR

In time programmed clock thermostats wherein the controlled temperature in a space is changed for comfort or energy saving during certain periods of the day or night, there is a need for manually overriding the time program at the home owner or occupant's will. Such has been done for many years in the T8082A Thermostat shown in the brochure Form No. 60-2416-4 revised 5/81 of Honeywell Inc. When a night time temperature is selected by the time programmed clock, such as 16°C, the home owner may want to restore the temperature to the day time program. Such is done by a manual changeover button which operates the thermostat switch for the day time temperature. With the need to reduce the cost of such time programmed thermostats, a lower powered motor is used and the associated switch operator must require less power.

The present invention is concerned with a ratchet means for a switch of a time programmed clock thermostat which requires little power and is not greatly biased to prevent movement in a wrong direction. A manual operator for the ratchet means thus must operate in one direction and not produce any drag on the ratchet means in a retracting direction. This is accomplished by the invention as characterized in claim 1.

Specifically, a ratchet means is driven by a pawl which is biased against the ratchet means when the pawl is moved in a forward direction and biased away from the ratchet means when returning to an initial position by the use of a cam and cam rider attached to the pawl. With such an operator a large amount of power can be provided to the ratchet means by the pawl and yet the pawl will not adversely move the ratchet means upon its return to the initial position. Preferred details are described in the subsequent claims. The invention will be explained with reference to the drawing, in which

Figure 1 is a schematic view of a control apparatus having a ratchet with a manually operated pawl for moving the ratchet a predetermined amount; and

Figure 2 is a lower view of Figure 1 showing the cam and pawl with the cam rider for moving the pawl against the ratchet means.

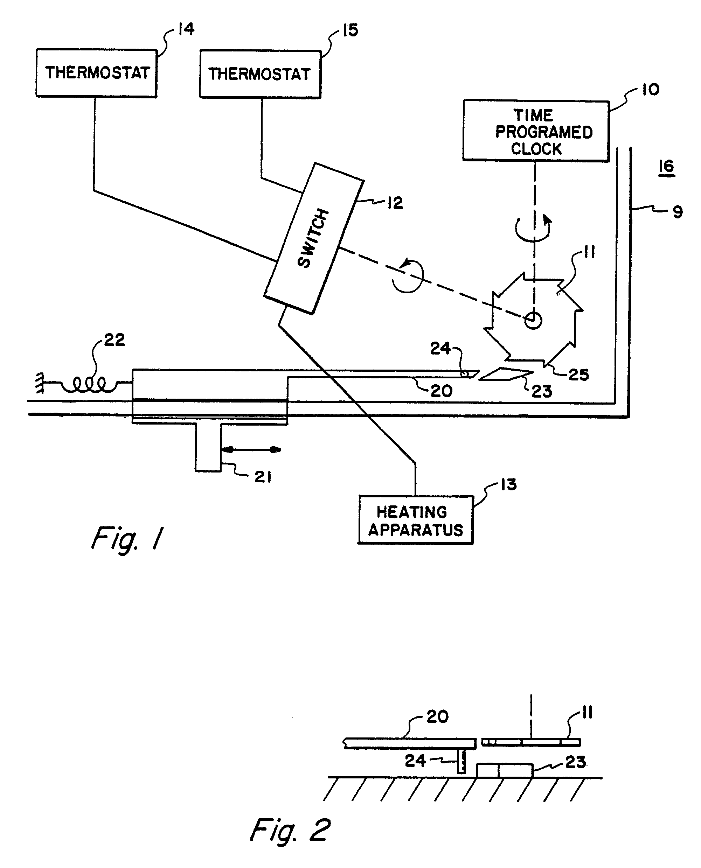

Referring to Figure 1, a space temperature control apparatus 9 has a time programmed clock means 10 connected to an indexing ratchet or ratchet wheel 11 for operating a switch 12 upon predetermined angular segments of movement of ratchet means 11. Switch 12 is adapted to connect a temperature conditioning apparatus or heating apparatus 13 to either a temperature responsive switch means or thermostat 14 or to a temperature responsive switch means or thermostat 15 which are set at different temperatures for controlling the temperature in a space 16. Depending upon the time program of clock 10, thermostat 14 may control the heating apparatus during the day time to maintain one temperature in space 16 and thermostat 15 may control the heating temperature during the night time to maintain a different temperature in space 16 as would be selected by the home owner.

To provide for a manual changeover of the heating apparatus from one of the thermostats to the other, a pawl or push member 20 is connected to a member or button 21 for movement of the pawl to the right against a spring bias 22 to engage ratchet wheel 11 to move the ratchet wheel one segment or angle of rotation before returning to its present initial position. Pawl 20 is resilient and biased in the position shown. A stationary cam or guide means 23 positioned adjacent the ratchet means is engaged by a cam rider 24 attached to the pawl member to move pawl member 20 upward and into engagement with one projection 25 of ratchet means 11 to move the ratchet means one segment or angle of rotational movement. Upon passing the right end of cam 23, rider 24 drops off the cam and follows the cam on the under side in the return direction to be completely away from ratchet means to not drag the ratchet means in a reverse direction.

As shown in Figure 2, pawl 20 is in a plane of the ratchet means 11 and rider 24 projects below the pawl to engage the surface of cam 23. With such an arrangement, even though the ratchet means is slightly biased to provide a low load operation on the time program clock, the pawl does not drag over the indexing means in its reverse direction, but only in the forward direction when the pawl is moved to the right, as shown in Figure 1, to move the ratchet means through the one segment of operation and thus to operate switch 12 to connect one or the other of the thermostats to the heating apparatus. Instead of using two separate thermostats 14 and 15 for controlling day temperature and night temperature, a single thermostat may be used having a changeable setting which can be changed by means of switch 12. In another embodiment one of the thermostats 14, 15 is used for control during heating periods and the other is active during cooling periods.

Time programmed clock is connected to ratchet wheel 11 for rotating the ratchet wheel in segments of operation. Simultaneously, through the mechanical connection, switch 12 is operated each segment of operation to connect either one or the other of the thermostats 14 and 15 to the heat control apparatus 13. As the clock moves through its time period, control by one or the other of the thermostats is accomplished to provide for a specific control of the temperature in space 16 with one thermostat for a selected period of time and another temperature by thermostat 15 at another period of time.

At certain times, a manual override of the type of temperature control of space 16 is desired to switch from one of the thermostats to the other or vice versa. By means of the member 21, the pawl 20 can be moved to the right to have the cam rider 24 engage the cam 23 and drive the pawl upward and to the right against the ratchet wheel 11 to move the ratchet wheel one segment of operation. In order to have a low power time programmed clock 10 driving the ratchet wheel, very little friction of the ratchet wheel is allowed. Therefore, when the pawl returns after moving ratchet wheel 11 in one segment of operation, it is desired not to have the pawl drag backward on the ratchet wheel. Such is accomplished by having the cam rider 24 move below the cam 23 and pull the pawl away from the ratchet wheel 11 upon its reverse operation back to the normal position by spring 22.

## Claims

1. A switch operator comprising ratchet means (11) connected to a switch means (12), **characterized by**

a) first means (20) movable toward and away from said ratchet means (11) to move said ratchet means a predetermined amount; and

b) stationary guide means (23) mounted adjacent said ratchet means (11) for directing said first means (20) against said ratchet means when said first means moves in a forward direction and for holding and directing said first means away from said ratchet means when said first means moves in a return direction.

2. The switch operator according to claim 1, **characterized in that**

a) the ratchet means (11) is a ratchet wheel which moves in one angular segment of operation of said first means (20) and drives said switch means (12) through an operation;

b) said first means (20) is a pawl, and

c) a rider (24) is attached to said pawl to engage said guide means (23) for moving the pawl to engage said ratchet wheel when said pawl moves in said forward direction and away from the ratchet means in said return direction.

3. The switch operator according to claim 2, **charactterized in that**

a) a time programmed clock (10) is connected to said ratchet means (11).

b) said switch means (12) is adapted to connect one of at least two (14, 15) thermostats located in a space to a temperature conditioning apparatus (13).

c) said pawl (20) is connected to a manually operated button (21) for overriding the operation of the time programmed clock (10) for switching one or the other of said two thermostats to the temperature conditioning apparatus (13) for changing the temperature maintained in the space.

4. A temperature control apparatus for maintaining a selected temperature at selected times in a space and comprising a switch operator according to one of the preceeding claims, **characterized by**

a) first and second thermostat means (14, 15);

b) switch means (12) adapted to connect either said first thermostat (14) means or said second thermostat means (15) to a temperature conditioning apparatus (13) furnishing temperature conditioned medium to the space;

c) ratchet means (11) to connect said switch means (12) to operate said switch means to select which of said first or second thermostat means is to control the temperature conditioning apparatusk

d) time programmed clock means (10),

e) means connecting said time programmed clock means to operate said ratchet means to selected controlled space temperature by connecting one or the other of said first and second thermostat means to the temperature conditioning apparatus during different selected times;

f) a manually operated change means (20, 21) having a pawl (20) for operating said ratchet means (11) and said switch means (12) to select either said first or second thermostat means for control of the temperature conditioning apparatus; and

g) cam means (23) mounted adjacent said ratchet means (11) for biasing said pawl (20) toward said ratchet means to engage said ratchet means when said change means is operated from an initial position in one direction and for biasing said pawl away from said ratchet means when said change means returns to said initial position.

Fig. 1

Fig. 2